# EUROPÄISCHE PATENTSCHRIFT

(11) **EP 3 542 235 B1**
(45) Veröffentlichungstag und Bekanntmachung des Hinweises auf die Patenterteilung: **29.11.2023**
(21) Anmeldenummer: 17803792.5
(22) Anmeldetag: 18.10.2017
(51) Int. Cl.: G05B 19/409, B29C 45/76, G06F 3/04847, G06F 3/0354, G06F 3/0489

(54) **INTERAKTIVES STEUERN EINER MASCHINE MIT RÜCKMELDUNG EINES STELLPARAMETERS**
INTERACTIVELY CONTROLLING A MACHINE WITH FEEDBACK FROM A CONTROL PARAMETER
COMMANDE INTERACTIVE D'UNE MACHINE DOTÉE D'UN RETOUR D'INFORMATION SUR UN PARAMÈTRE DE RÉGLAGE

(30) Priorität: 18.10.2016 DE 102016119853
(43) Veröffentlichungstag der Anmeldung: 25.09.2019
(73) Patentinhaber: Arburg GmbH + Co KG, 72290 Loßburg (DE)
(72) Erfinder: DUFFNER, Eberhard, 72181 Starzach (DE); FAULHABER, Werner, 72290 Loßburg Wittendorf (DE)
(74) Vertreter: RPK Patenanwälte Reinhardt und Kaufmann Partnerschaft mbB (Pforzheim)
(86) Internationale Anmeldenummer: PCT/EP2017/076589
(87) Internationale Veröffentlichungsnummer: WO 2018/073294

(56) Entgegenhaltungen:
- EP-A2- 1 273 851
- WO-A1-2007/025396
- WO-A2-2012/155167
- DE-A1-102004 051 106
- DE-A1-102010 051 639
- DE-A1-102012 011 156
- US-A- 4 704 676
- US-A1- 2006 016 800

## Beschreibung

Die Erfindung betrifft eine Mensch-Maschineschnittstelle sowie ein Verfahren zur interaktiven Steuerung einer Stellfunktion einer Maschine durch eine manuelle Stelleingabe.

Mensch-Maschineschnittstellen zur interaktiven Steuerung von Maschinen sind beispielsweise zum Einlernen und/oder Einfahren einer Spritzgießmaschine bekannt, bei denen eine Reihe von manuellen Einstellvorgängen erforderlich ist. Dazu können die entsprechenden Maschinen mit einer Mensch-Maschinen-Schnittstelle verbunden werden und/oder eine solche aufweisen. Es ist bekannt, für solche Aufgaben fest verdrahtete Schaltelemente und/oder Tastenfelder, Tastaturen, Manipulatoren und/oder berührungssensitive Bildschirme einzusetzen. Die Mensch-Maschineschnittstelle kann über eine entsprechende Datenverarbeitungseinheit bzw. eine Maschinensteuerung mit der Maschine verbunden sein und über diese Verbindung komplexe Einstellvorgänge ermöglichen.

Aus der DE 10 2010 051 639 A1 ist eine Steuerungsvorrichtung für eine Kunststoff verarbeitenden Maschine mit einer als Mensch-Maschine-Schnittstelle ausgebildeten Multi-Touch-Funktionalität bekannt. Maschinenabläufe und Produktionsparameter sind an dieser Bedieneinheit durch einen Bediener eingebbar, anzeigbar und veränderbar.

Die WO 2007/025396 A1 zeigt die Zuordnung zweier Bedienfelder zueinander, die Visualisierung der Tastenfunktionen wird über graphische Symbole realisiert, wobei die Tasten dynamisch belegbar sind. Dabei werden Maschinenabläufe und Produktionsparameter bildschirmunterstützt verändert, wobei sicht- und erfühlbare Touchscreentasten verwendet werden. Die dort angeführten +/- Tasten wirken inkrementell (vergleichbar einem Lautstärkeregler an einem HiFi Gerät). Durch ein Betätigen der +/- Taste wird eine Geschwindigkeit inkrementell erhöht oder reduziert.

Aus der DE 10 2004 051 106 A1 ist eine Kunststoff verarbeitenden Maschine bekannt, bei die Bildschirmausgabe an einer Bedieneinheit darstellbar und Eingaben sind an die Bildschirmausgabe rückübermittelbar. Damit erfolgt ein "Vornehmen von Eingaben in der auf dem Bildschirm der Bedieneinheit dargestellten Bildschirmausgabe", d.h. es gibt keine unabhängig nutzbare Parametereingabe- bzw. Parameteranzeigeeinheit.

Aus der DE 10 2012 011 156 A1 ist eine Spritzgießmaschine mit einem berührungsempfindlichen Bildschirm bekannt, an dessen Rand Bedientasten vorgesehen sind, die dynamisch je nach aufgerufenem Untermenü mit Auslösesymbolen belegt werden.

Eine dynamische Belegung der Bedienelemente einer Mensch-Maschineschnittstelle ist auch bereits aus der DE 91 10 358 U1 bekannt.

Aus der EP 1 656 245 B1 sind ein Verfahren sowie eine Vorrichtung zur interaktiven Steuerung einer insbesondere zyklisch arbeitenden Kunststoffspritzgießmaschine bekannt. Das interaktive Steuern erfolgt mittels einer Eingabeeinheit, die über eine Datenverarbeitungseinheit mit der Spritzgießmaschine verbunden ist. Eingabefelder können virtuell belegt werden.

Die DE 10 2005 052 725 B3 zeigt ein Bedienelement für eine Spritzgießmaschine mit einem Bildschirm zur Darstellung von Programmdaten, der zum Teil als Touchscreen ausgebildet ist. Virtuelle Funktionstasten können außerhalb des Bildschirms als auch auf dem Bildschirm vorgesehen werden. Hierzu überragt der Bildschirm den Touchscreen.

Die DE 601 13 685 T2 offenbart eine Schnittstelle zur Maschinensteuerung mit konfigurierbaren Tasten, also Softkeys, in Bereichen parallel zum Bildschirm.

Die US 2004/0021698A1 schlägt ein graphisches Interface für eine Multifunktions-Einrichtung mit einem berührungssensitiven Display vor, auf dem eine Hierarchie graphischer Objekte für die Multifunktionsbedienung einem Benutzer darstellbar ist.

Die WO 2012/155167 A2 offenbart eine Mensch-Maschineschnittstelle und ein Verfahren zur manuell gesteuerten Beeinflussung von Bewegungen einer elektronisch gesteuerten Maschine oder Anlage. Im Zuge der manuellen Bedienung wird ein proportional oder quasi analog steuerndes Eingabemittel eingesetzt, das als ein zumindest eindimensional auflösender, berührungssensitiver Positionserfassungssensor, insbesondere in Art eines Touchpads oder Touch- Screens, ausgeführt ist. Der berührungssensitive Positionserfassungssensor wird dabei zur fortlaufenden Erfassung einer überstreichenden Betätigungsbewegung oder von zumindest einer einzelnen Betätigungsposition innerhalb einer elektronisch auswertbaren Betätigungsfläche des berührungssensitiven Positionserfassungssensors verwendet. Unter Einbindung des berührungssensitiven Positionserfassungssensors wird eine zeitliche Folge von Vorgabe- oder Positionswerten in Bezug zu dessen Betätigungsfläche ermittelt und in eine korrespondierende zeitliche Folge von Sollwerten für die Antriebssteuerung umgewandelt.

Ausgehend von diesem Stand der Technik liegt der vorliegenden Erfindung die Aufgabe zugrunde, ein interaktives Steuern einer komplexen Maschine hinsichtlich ihrer Ergonomie, Sicherheit und intuitiven Bedienbarkeit zu verbessern.

Diese Aufgabe wird durch eine Mensch-Maschineschnittstelle mit den Merkmalen des Anspruches 1 sowie durch ein Verfahren mit den Merkmalen des Anspruches 7 und eine Spritzgießmaschine mit den Merkmalen des Anspruches 13 gelöst. Vorteilhafte Weiterbildungen sind Gegenstand der abhängigen Patentansprüche.

Die Mensch-Maschineschnittstelle weist eine Stelleingabeeinheit und eine unabhängig von dieser bedienbare Parametereingabeeinheit auf. Mit der Stelleingabeeinheit kann eine Stellfunktion einer Maschine in Abhängigkeit einer Stelleingabe manuell gesteuert werden. Unter einer Stellfunktion kann insbesondere das Einstellen eines Parameters oder bevorzugt eine tatsächlich an der Maschine stattfindende Bewegung eines beweglichen Bauteils verstanden werden. Durch eine entsprechende manuelle Stelleingabe an der Stelleingabeeinheit kann die Stellfunktion manuell, simultan und interaktiv gesteuert werden. Dies kann insbesondere bidirektional erfolgen, was beispielsweise einem vorwärts und rückwärts Bewegen des beweglichen Bauteils entsprechen kann. Eine solche Bewegung kann grundsätzlich mit unterschiedlichen Geschwindigkeiten erfolgen, wobei in diesem Fall die Geschwindigkeit als Parameter mit der Parametereingabeeinheit beeinflussbar ist. Es können dabei vergleichsweise hohe Stellgeschwindigkeiten wünschenswert sein, um die entsprechende Stellfunktion möglichst schnell abschließen bzw. erreichen zu können. Demgegenüber können jedoch insbesondere im Bereich einer Endposition, bei einem Auftreten von hohen Drücken und/oder hohen Kräften während der Stellfunktion auch niedrigere Stellgeschwindigkeiten wünschenswert sein.

Sofern im Rahmen dieser Anmeldung von Parametern die Rede ist, bezieht sich dies nicht nur auf die Geschwindigkeit einer Bewegung, sondern auf die Parameter, die zum Betrieb einer Spritzgießmaschine eingegeben werden. Dies sind Druck, Temperatur, Zeitpunkte wie z.B. Umschaltzeitpunkte zwischen Einspritzen und Nachdruckphase, Zeitpunkte für den Betrieb des Auswerfers, Teilzykluszeiten z.B. beim Mehrkomponentenspritzen, Wegangaben für die Formschließeinheit, Formhöhe, Dosier- und Einspritzmenge, Volumenstrom, Menge an zumischbaren Komponenten und vieles mehr, was dem Fachmann an einer Spritzgießmaschine geläufig ist. Der bevorzugte Einsatzbereich der Erfindung liegt dann in dem Bereich, in dem voneinander abhängige Parameter einzugeben sind.

Ein Bediener der Maschine kann mittels der Parametereingabeeinheit simultan zur Steuerung der Stellfunktion auch deren Stellparameter manuell steuern. Damit lassen sich also zwei voneinander funktional abhängige Parameter unabhängig steuern. Denkbar ist z.B. ein Steuern/Eingeben von Druck und Temperatur, Druck und Volumenstrom, aber auch Stellgrößen wie der Weg eines Werkzeugs zusammen mit dem Weg eines Auswerfers oder auch Beschleunigung und/oder Geschwindigkeit eines oder auch mehrere Elemente der Spritzgießmaschine.

Es ist also ein bestmöglicher Kompromiss, insbesondere bei einem Einlernen der Maschine auf einen neuen Prozess, aus vergleichsweise schneller Durchführung der Stellfunktion und Vermeidung von möglicherweise auftretenden unerwünschten Wirkungen bei zu hohen Stellgeschwindigkeiten oder bei kollisionsbegründende Bewegungen möglich, wenn z.B. der Auswerfer ins sich öffnende Werkzeug eingefahren wird. Durch die Parameteranzeigeeinheit, die zusammen mit der Parametereingabeeinheit an der Mensch-Maschineschnittstelle angeordnet ist, ist es dem Bediener der Maschine möglich, stets die Stellparameter im Bewusstsein zu haben. Zudem ist der manuell gesteuerte Stellparameter als Sollwert oder als ein tatsächlich an der Maschine auftretender Istwert mittels der Parameteranzeigeeinheit rückmeldbar. Der Stellparameter ist von der Stellfunktion funktional abhängig. Im Beispiel der Eingabe einer Geschwindigkeit in Verbindung mit einer Stellgröße bedeutet dies, dass durch die Parameteranzeigeeinheit die Geschwindigkeit angezeigt wird, die zusammen mit der Parametereingabeeinheit zur Eingabe der Geschwindigkeit an der Mensch-Maschineschnittstelle angeordnet ist, so dass Bediener stets diese Parameter im Bewusstsein hat. Dadurch kann die Sicherheit, Ergonomie und intuitive Bedienbarkeit der Maschine verbessert werden, da der Bediener der Maschine eine direkte Rückmeldung erhält, insbesondere genau dort, wo auch die Stellgeschwindigkeit manuell gesteuert werden kann, also an der Geschwindigkeitseingabeeinheit, um beim Beispiel der Geschwindigkeit zu bleiben.

Unter zusammen angeordnet, kann eine benachbarte, übereinander, nebeneinander und/oder überlagerte Anordnung und/oder eine räumliche Zuordnung verstanden werden. Die Rückmeldung des Stellparameters wie einer Geschwindigkeit kann auf verschiedene Art und Weise erfolgen, insbesondere durch eine Verdeutlichung eines Sollwerts, also des manuell eingegebenen Parameters oder einer tatsächlich an der Maschine auftretende Ist-werts des Parameters, insbesondere in Form einer von dieser abhängigen Stellparametergröße erfolgen. Die direkte Rückmeldung des Stellparameters wie einer Stellgeschwindigkeit kann optisch, haptisch und/oder taktil erfolgen, insbesondere in Form einer Skalenanzeige.

Die Parameteranzeigeeinheit weist eine entlang einer länglichen berührungssensitiven Fläche der Parametereingabeeinheit ausgerichtete Bargraph-Anzeige auf. Unter einer Bargraph-Anzeige kann im weitesten Sinne eine flächige Skalenanzeige, insbesondere eine grafische Darstellung eines Balkens bzw. Balkendiagrammes verstanden werden. Es ist jedoch auch denkbar, dass die Bargraph-Anzeige eine veränderliche gekrümmte, insbesondere runde Ausdehnung aufweist.

Die Mensch-Maschineschnittstelle ist mit einem berührungssensitiven Bildschirm ausgerüstet, der unabhängig von den beschriebenen Eingabeeinheiten bedienbar ist. Vorzugsweise sind die beschriebenen Eingabeeinheiten am Rand des Bildschirms angeordnet. Besonders bevorzugt überdeckt eine berührungssensitive Oberfläche des Bildschirms nicht nur dessen Anzeigeeinheit sondern auch die übrigen Eingabeeinheiten. Bei einer Auslegung des berührungssensitiven Bildschirms als sogenanntes Multitouchdisplay ist es möglich, eine Vielzahl von Eingaben in Form von Berührungen an unterschiedlichen Stellen des Bildschirms gleichzeitig zu verarbeiten. Mittels des berührungssensitiven Bildschirms können weitere Funktionen der Mensch-Maschineschnittstelle realisiert werden, insbesondere eine grafische Verdeutlichung eines Prozesses, wie z.B. eines einzulernenden Prozesses durch das manuelle Steuern, die Anzeige einer Tastatur zur Eingabe von Daten und/oder Ähnliches. Durch die unabhängig bedienbaren Eingabeeinheiten in Kombination mit dem berührungssensitiven Bildschirm kann eine sichere intuitive Bedienung erfolgen, ohne dadurch auf die Flexibilität, die der berührungssensitive Bildschirm bietet, verzichten zu müssen.

Ferner sind Stelleingabeeinheit und Parametereingabeeinheit mittels einer insbesondere seriellen Echtzeitschnittstelle direkt mit einer Maschinensteuerung der Maschine verbunden sein. Dadurch lässt sich ein manuelles Steuern der Maschine ohne oder zumindest ohne nennenswerte Zeitverzögerung durchführen. Eventuelle Programmiervorgänge und/oder rechenintensive Anlernvorgänge können gegebenenfalls mittels des berührungssensitiven Bildschirms und/oder über eine entsprechend Recheneinheit z.B. in der Maschinensteuerung und/oder an der Mensch-Maschinenschnittstelle durchgeführt werden. Unabhängig davon kann das manuelle Steuern über die Echtzeitschnittstelle direkt und ohne Zeitverzögerung erfolgen. Dies ermöglicht ein Parametrieren in Echtzeit.

Die Bargraph-Anzeige kann passiv oder aktiv mit Leuchtsegmenten, insbesondere als Pixel, als Bandanzeige mit einer Vielzahl von Leuchtsegmenten und/oder auf andere Art und Weise realisiert werden.

Vorzugsweise weist die Bargraph-Anzeige eine Vielzahl linear hintereinander einzeln ansteuerbarer Leuchtsegmente wie Leuchtdioden auf. Die berührungssensitive längliche Fläche ist entlang der Bargraph-Anzeige angeordnet. Dadurch ist es möglich, dass die Bargraph-Anzeige während eines Einstellvorganges an der berührungssensitiven Fläche einer dafür erforderlichen Bedieneingabe folgt. Insbesondere kann einem Überstreichen der berührungssensitiven Fläche mittels eines Körperteils direkt durch ein entsprechendes Verlängern oder Verkürzen eines Balkens der Bargraph-Anzeige gefolgt werden und damit die eingegebene bzw. gewählte Stellgeschwindigkeit simultan, visuell rückgemeldet werden.

Erfindungsgemäß ist vorgesehen, dass zumindest seitlich oder beidseitig der Bargraph-Anzeige eine modulierbare Leuchtanzeige angeordnet ist, mittels der ein Zustand der Maschine anzeigbar ist. Unter modulierbar kann verstanden werden, dass die Anzeige hinsichtlich einer Farbe, eines Blinkmusters, einer Blinkfrequenz, einer Helligkeit und/oder einer beliebigen anderen Eigenschaft zum Anzeigen des Zustands der Maschine veränderbar ist. Vorzugsweise können zumindest die Farben grün für in Ordnung und rot für kritisch verwendet werden, gegebenenfalls beliebig viele Zwischentöne zur Symbolisierung eines Zustandes zwischen in Ordnung und kritisch. Besonders bevorzugt wird nicht nur die Leuchtanzeige sondern auch zusätzlich die Parameteranzeigeeinheit moduliert, wobei ggf. die Vielzahl der Leuchtsegmente der Bargraph-Anzeige genauso moduliert werden können wie die Leuchtanzeige. Es ergibt sich der Vorteil, dass auch bei einem Parameterwert von null, bei der beispielsweise keines der Leuchtsegmente der Bargraph-Anzeige mehr leuchtet, der Zustand der Maschine angezeigt werden kann. Dadurch dass die Leuchtanzeige seitlich oder beidseitig der Bargraph-Anzeige angeordnet ist, erfolgt die Rückmeldung ebenfalls dort, wo der Parameter wie die Stellgeschwindigkeit eingebbar ist. Damit sind ein intuitives Ablesen des Zustandes und eine Verbesserung der Bediensicherheit möglich.

In einem weiteren Ausführungsbeispiel sind die Bargraph-Anzeige und /oder die Leuchtanzeige konisch ausgebildet, wobei sich die Leuchtanzeige vorzugsweise y-förmig über die Mensch-Maschinenschnittstelle erstreckt. Unter der y-förmigen Erstreckung der Leuchtanzeige kann verstanden werden, dass diese sich ausgehend von einem Eck der Mensch-Maschineschnittstelle beidseitig der Bargraph-Anzeige erstreckt und dann abgewinkelt parallel zu zwei von dem Eck ausgehenden Seiten der Mensch-Maschineschnittstelle verläuft. Damit ist die Leuchtanzeige bei jedwedem Betrachten einer Anzeigefläche der Mensch-Maschineschnittstelle stets sichtbar. Außerdem kann dadurch die Leuchtanzeige bei eventuellen Bedienhandlungen durch Körperteile, wie beispielsweise eine Hand oder einen Arm eines Bedieners nicht vollständig verdeckt werden, ist also auch dann stets sichtbar. Dadurch kann das Erfassen des Zustandes verbessert und eine Sicherheit während der Bedienung erhöht werden.

Eine weitere Alternative der Mensch-Maschineschnittstelle sieht vor, dass diese eine unabhängig bedienbare Auswahleingabeeinheit aufweist. Mittels der Auswahleingabeeinheit kann die Stellfunktion durch eine manuelle Bedienhandlung ausgewählt werden. Durch die unabhängige Bedienbarkeit der Auswahleingabeeinheit ist sich der Bediener der Maschine stets bewusst, welche Stellfunktionen er aus einer Vielzahl von Stellfunktionen ausgewählt hat. Besonders bevorzugt ist es denkbar, dass die Auswahl der Stellfunktion ebenfalls zurückgemeldet wird. Insbesondere direkt an der Auswahleingabeeinheit und/oder zusätzlich auch an der Stelleingabeeinheit.

Bevorzugt sind die Parameteranzeigeeinheit und/oder die Parametereingabeeinheit zwischen einer Eingabeeinheit insbesondere für fest belegte Tasten und der Stelleingabeeinheit angeordnet. Durch diese zentrale Anordnung kann der Stellparameter besonders einfach eingegeben und seine Rückmeldung beobachtet werden.

In einem weiteren Ausführungsbeispiel der Mensch-Maschineschnittstelle können die Eingabeeinheit und/oder die Parametereingabeeinheit flächenbündig eingelassene Glaszylinder als haptisch wahrnehmbare Bedienelemente aufweisen. Unter Glas kann jegliche Art von transparentem Material, also auch Acrylglas verstanden werden. Durch die flächenbündige Anordnung kann eine Oberfläche der Mensch-Maschineschnittstelle gut gereinigt werden, wobei dennoch eine taktile Rückmeldung, insbesondere durch eine Tastbarkeit der Glaszylinder möglich ist. Insbesondere können die Bedienelemente eine übliche bzw. gewohnte Kraftwegekennlinie typischer Tasten bzw. Taster aufweisen. Bevorzugt können die eingelassenen Glaszylinder ähnlich wie ein Schutzglas auf einem berührungssensitiven Bildschirm Teil eines multitouchfähigen Eingabegerätes sein, also als Sensortasten ausgebildet sein und dennoch die wünschenswerte haptische bzw. taktile Rückmeldung ermöglichen.

Außerdem ist es denkbar, die physikalisch vorhandenen Bedienelemente optisch zu kennzeichnen, insbesondere mit statischen, insbesondere aufgedruckten, Symbolen, so dass diese mit einer statischen Funktion belegbar sind. Dies ermöglicht ebenfalls eine sicherere Bedienung der Mensch-Maschineschnittstelle da sicherheitskritische Bedienungen, insbesondere Auswahlvorgänge an der Eingabeeinheit stets an derselben Stelle wiederzufinden sind. Damit können versehentliche Fehlbedienungen, also das versehentliche Stellen eines Bauteils der Maschine vermieden werden.

Ferner können aber auch Bedienelemente der Stelleingabeeinheit dynamisch belegt werden, insbesondere je nach Bedarf nach einer entsprechenden Auswahl an der Auswahleingabeeinheit oder ggf. auch der Eingabeeinheit gekennzeichnet. Sie können z.B. auf einem zusätzlichen Display als ein entsprechendes Symbol dargestellt werden. Dadurch kann ein bestmöglicher Kompromiss zwischen einer statischen und dynamischen Nutzung der Bedienelemente gefunden werden. Eine Bedienung erfolgt bewusst und über statisch angeordnete und statisch belegte Bedienelemente. Die danach erfolgende tatsächliche Steuerung der Stellfunktion kann mittels, insbesondere zwar ebenfalls statisch angeordneter, jedoch dynamisch mit der jeweiligen Stellfunktion belegbarer Bedienelemente erfolgen. Ferner ist es zusätzlich möglich, auch die Parametereinstelleinheit statisch an der Mensch-Maschineschnittstelle, also stets an demselben Ort anzuordnen. Damit kann auch die weitere kritische Größe, nämlich der Stellparameter wie eine Stellgeschwindigkeit stets bewusst und sicher manuell gesteuert werden.

Ferner kann auch die Eingabeeinheit mittels der insbesondere seriellen Echtzeitschnittstelle direkt mit der Maschinensteuerung der Maschine verbunden sein. Dadurch lässt sich ein manuelles Steuern der Maschine ohne oder zumindest ohne nennenswerte Zeitverzögerung durchführen. Eventuelle Programmiervorgänge und/oder rechenintensive Anlernvorgänge können gegebenenfalls mittels des berührungssensitiven Bildschirms und/oder über eine entsprechend Recheneinheit z.B. in der Maschinensteuerung und/oder an der Mensch-Maschinenschnittstelle durchgeführt werden. Unabhängig davon kann das manuelle Steuern über die Echtzeitschnittstelle direkt und ohne Zeitverzögerung erfolgen. Dies ermöglicht ein Parametrieren in Echtzeit.

Das Verfahren zum interaktiven Steuern eines Stellparameters einer Maschine wird insbesondere mittels einer vorab beschriebenen Mensch-Maschinenschnittstelle durchgeführt. Insofern ergeben sich die vorab beschriebenen Vorteile. Zunächst werden ein berührungssensitiver Bildschirm und die Stelleingabeeinheit bereitgestellt. Diese weist insbesondere die haptisch wahrnehmbaren Bedienelemente auf, insbesondere mit festangeordneten Piktogrammen und/oder Symbolen, beispielsweise in Form von Pfeilen und/oder Plus-, Minus-Zeichen. Im Falle einer bidirektionalen Steuerung können die Bedienelemente paarweise vorgesehen sein. Mittels der Stelleingabeeinheit erfolgt das Erfassen einer manuellen Eingabe zum manuellen Steuern der Stellfunktion der Maschine. Außerdem wird die Parametereingabeeinheit bereitgestellt, mittels der ein simultanes Erfassen einer manuellen weiteren Parametereingabe zum manuellen Steuern eines von der Stellfunktion funktional abhängigen Parameters erfolgt. Dadurch kann ein Parameter wie z.B. eine Geschwindigkeit der Stellfunktion manuell gesteuert werden. Schließlich wird eine Parameteranzeigeeinheit anhand der Mensch-Maschineschnittstelle bereitgestellt. Stelleingabeeinheit und Parametereingabeeinheit werden mittels einer Echtzeitschnittstelle mit einer Maschinensteuerung der Maschine verbunden. Mittels der Parameteranzeigeeinheit erfolgt unmittelbar, also simultan ein Steuern der Stellfunktion und des Stellparameters und dabei ein Rückmelden eines Sollwerts oder eines tatsächlich an der Maschine auftretenden Istwerts der Stellparameter der Stellfunktion mittels einer entlang einer länglichen berührungssensitiven Fläche der bereitgestellten Parameteranzeigeeinheit ausgerichteten Bargraph-Anzeige. Insbesondere kann also der eingestellte oder ein tatsächlich an der Maschine anzutreffender Stellparameter der Stellfunktion rückgemeldet werden. Die simultane bzw. unmittelbare Rückmeldung z.B. einer Stellgeschwindigkeit oder eines anderen Parameters ermöglicht eine intuitive Bedienung und erhöht die Bediensicherheit, beispielsweise um einen versehentlich zu hoch gewählten Stellparameter zu vermeiden.

Der berührungssensitive Bildschirm wird unabhängig von der Parametereingabeeinheit und der Stelleingabeeinheit bedient. Es ist möglich, dass das Visualisieren der ausgewählten Stellfunktion mittels des Bildschirms erfolgt, insbesondere in einem räumlichen Bezug oder Nahbereich zu dem physikalischen Bedienelement der Stelleingabeeinheit. Dadurch ist es möglich, dieses dynamisch, also in Abhängigkeit der Auswahleingabe zu belegen. Durch das Visualisieren der ausgewählten Stellfunktion kann der Bediener der Mensch-Maschineschnittstelle bzw. der Maschine jederzeit überprüfen, welche Stellfunktion er gerade ausführt. Dementsprechend erfolgt ein Erfassen der manuellen Stelleingabe mittels des Bedienelements an dem die Stellfunktion visualisiert wird. Die Visualisierung kann beispielsweise direkt neben dem entsprechenden Bedienelement auf dem Bildschirm erfolgen.

Im Verfahren werden die Stelleingabeeinheit und die Parametereingabeeinheit mittels einer Echtzeitschnittstelle mit einer Maschinensteuerung der Maschine so verbunden, dass ein unmittelbares Feedback zwischen Steuerung und Eingabeeinheit hinsichtlich der Soll- und Istwerte möglich wird. Dadurch kann die intuitive Bedienung der Steuerung und damit der Maschine nicht nur beim Parametrieren sondern auch beim Betrieb der Maschine erleichtert werden.

Vorzugsweise wird auch die die Eingabeeinheit mittels einer Echtzeitschnittstelle mit der Maschinensteuerung der Maschine so verbunden, dass ein unmittelbares Feedback zwischen Steuerung und Eingabeeinheit hinsichtlich der Soll- und Istwerte möglich wird.

Vorzugsweise erfolgt im Verfahren ein Bereitstellen einer Auswahleingabeeinheit, mittels der ein Erfassen einer manuellen Auswahleingabe zum Auswählen der Stellfunktion erfolgt. Erst nach der manuellen Auswahleingabe erfolgt ein Freischalten der Stelleingabeeinheit, insbesondere eines oder eines paarweise angeordneten Bedienelements der Stelleingabeeinheit, zum Erfassen der manuellen Stelleingabe. Die Stelleingabe wird also in Abhängigkeit der erfassten Auswahleingabe erfasst, nämlich nur dann, wenn zuvor die Stellfunktion aus einer Vielzahl von Stellfunktionen auch ausgewählt wurde. Vorzugsweise können die Eingabeeinheit oder einzelne Bedienelemente der Eingabeeinheit gesperrt werden, so dass gesperrte, nicht zur Verfügung stehende Stellfunktionen auch nicht ausgewählt und in Folge nicht gestellt werden können. Ebenso können die Stellfunktionen mit einer Endabschaltfunktion versehen sein, so dass ein Überfahren eines Endanschlages trotz einer entsprechenden Eingabe an der Stelleingabeeinheit sicher verhinderbar ist. Dadurch können unerwünschte Beschädigungen der Maschine vermieden werden. Gleichzeitig kann z.B. eine entsprechende Warnmeldung an der Mensch-Maschineschnittstelle angezeigt werden.

Bevorzugt erfolgt ein Rückmelden des Freischaltens und/oder der ausgewählten Stellfunktion an der Stelleingabeeinheit und/oder an der Eingabeeinheit. Dadurch ist eine intuitive Bedienung der Mensch-Maschineschnittstelle möglich. Das Rückmelden des Freischaltens kann beispielsweise durch Hinterleuchten des entsprechend betätigten Bedienelementes der Eingabeeinheit mit einer größeren Leuchtintensität erfolgen. Alternativ oder zusätzlich kann dies auch an der Stelleingabeeinheit, insbesondere an dem dann zur Verfügung stehenden bzw. dynamisch belegten Bedienelement der Stelleingabeeinheit erfolgen. Außerdem ist es möglich, dass an oder auf dem Bedienelement der Stelleingabeeinheit die Stellfunktion z.B. mittels eines entsprechenden Funktionspiktogramms oder Symbols symbolisiert wird.

Besonders bevorzugt erfolgt ein dynamisches Belegen des physikalischen Bedienelements der Stelleingabeeinheit in Abhängigkeit der manuellen Auswahleingabe und ein Erfassen der manuellen Stelleingabe mittels des physikalischen Bedienelements der Stelleingabeeinheit. Dadurch ist es möglich, mit einer vergleichsweisen geringen Anzahl an physikalischen Bedienelementen der Stelleingabeeinheit bei einer guten intuitiven Bedienbarkeit und einer hohen Sicherheit eine vergleichsweise große Anzahl an Stellfunktionen manuell steuerbar zu machen. Das Symbolisieren der ausgewählten Stellfunktionen erfolgt vorzugsweise an oder neben dem dynamisch belegten Bedienelement der Stelleingabeeinheit, insbesondere nur dann, wenn auch zuvor eine entsprechende Auswahleingabe an der Auswahleingabeeinheit vorgenommen wurde. Insbesondere lässt sich durch ein nochmaliges Betätigen der Auswahleingabeeinheit die dynamische Belegung des Bedienelements der Stelleingabeeinheit wieder zurücknehmen, also wieder sperren.

Die Aufgabe wird außerdem durch eine Maschine, insbesondere eine Spritzgießmaschine, mit einer vorab beschriebenen Mensch-Maschineschnittstelle und/oder eingerichtet, ausgelegt und/oder programmiert zum Durchführen eines vorab beschriebenen Verfahrens gelöst. Es ergeben sich die vorab beschriebenen Vorteile.

Weitere Vorteile ergeben sich aus den Unteransprüchen und der nachfolgenden Beschreibung eines bevorzugten Ausführungsbeispiels.

Im Folgenden wird die Erfindung anhand eines Ausführungsbeispiels näher erläutert. Es zeigen:
- Fig. 1a, 1b: dreidimensionale Ansichten jeweils von schräg vorne und hinten einer Mensch-Maschineschnittstelle zum interaktiven Steuern einer Maschine;
- Fig. 2: eine Draufsicht auf eine Bedienfläche der in den Figuren 1a und 1b dargestellten Mensch-Maschineschnittstelle;
- Fig. 3: eine Seitenansicht der in den Figuren 1 und 2 dargestellten Mensch-Maschineschnittstelle; und
- Fig. 4a, 4b: jeweils eine Draufsicht von oben der in den Figuren 1 bis 3 dargestellten Mensch-Maschineschnittstelle, wobei Fig. 4b ein in Fig. 4a mittels eines strichpunktierten Kreises symbolisiertes Detail der Mensch-Maschineschnittstelle zeigt.

### Ausführliche Beschreibung bevorzugter Ausführungsbeispiele

Die Figuren zeigen eine Mensch-Maschineschnittstelle 1 in verschiedenen Ansichten. Im Folgenden wird auf die Figuren gleichermaßen Bezug genommen, es sei denn, es ist Gegenteiliges erwähnt.

Die Mensch-Maschineschnittstelle 1 dient zur interaktiven Steuerung einer nicht näher dargestellten und lediglich mittels des Bezugszeichens 3 symbolisierten Maschine. Bei der Maschine 3 handelt es sich insbesondere um eine Spritzgießmaschine zur Verarbeitung von Kunststoffen und anderer plastifizierbarer Materialien wie z.B. pulvrige oder keramische Massen. Die Spritzgießmaschine weist insbesondere zumindest eine Plastifiziereinheit und eine Formschließeinheit und vorzugsweise eine Vielzahl von beweglichen und einstellbaren Bauteilen auf, deren Lage durch eine entsprechende Bedienereingabe an der Mensch-Maschineschnittstelle 1 manuell gesteuert bzw. eingestellt werden können. Dazu weist die Mensch-Maschineschnittstelle 1 eine an einem rechten Rand 31 angeordnete Stelleingabeeinheit 5 sowie eine an einem unteren Rand 33 angeordnete Eingabeeinheit 17 auf. Auf dem Bildschirm selbst ist durch belegbare Tasten eine Auswahleingabeeinheit 42 gebildet. Stelleingabeeinheit 5 und Eingabeeinheit 17 sind über ein Eck 35 an den Rändern 31 und 33 der Mensch-Maschineschnittstelle 1 angeordnet. Dabei sind sie ähnlich einer Gehrungspassung an dem Eck 35 benachbart zueinander angeordnet, wobei zwischen diesen ein Freiraum verbleibt.

In dem zwischen der Stelleingabeeinheit 5 und der Eingabeeinheit 17 verbleibenden Freiraum ist eine Parametereingabeeinheit 7 angeordnet. Die Parametereingabeeinheit 7 weist eine den zwischen der Eingabeeinheit 17 und der Stelleingabeeinheit 5 verbleibenden Freiraum ausfüllende Fläche 11 auf. Die Fläche 11 ist als berührungssensitive Fläche ausgelegt, reagiert also auf Berührungen eines Bedieners der Mensch-Maschineschnittstelle 1. Damit ist die Fläche 11 Teil der Parametereingabeeinheit 7, wobei ein Überstreichen der streifenförmigen Fläche 11 ein intuitives Einstellen, ähnlich dem Einstellen eines Schiebereglers, einer Stellgeschwindigkeit einer Stellfunktion der Maschine 3 ermöglicht.

Unter einem Parameter werden dabei die Parameter verstanden, die zum Betrieb einer Spritzgießmaschine eingegeben werden können. Dies sind Druck, Geschwindigkeit einer Bewegung, Temperatur, Zeitpunkte wie z.B. Umschaltzeitpunkte zwischen Einspritzen und Nachdruckphase, Zeitpunkte für den Betrieb des Auswerfers, Teilzykluszeiten z.B. beim Mehrkomponentenspritzen, Wegangaben für die Formschließeinheit, Formhöhe, Dosier- und Einspritzmenge, Volumenstrom, Menge an zumischbaren Komponenten und vieles mehr, was dem Fachmann an einer Spritzgießmaschine geläufig ist. Der bevorzugte Einsatzbereich der Erfindung liegt damit in dem Bereich, in dem voneinander abhängige Parameter einzugeben sind.

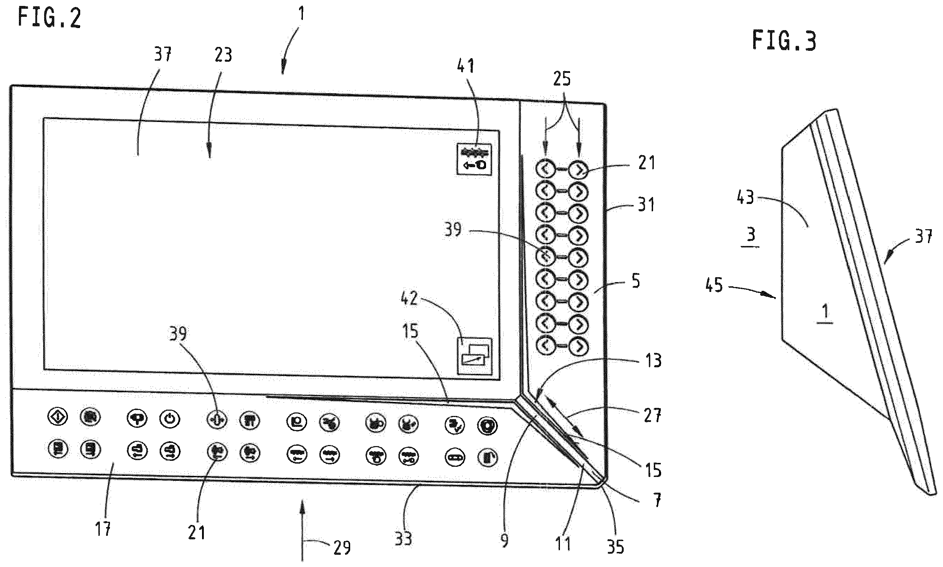

Ebenfalls in dem Freiraum und mit einer länglichen Ausdehnung bzw. streifenförmig weist die Mensch-Maschineschnittstelle 1 eine Parameteranzeigeeinheit 9 auf. Die Parametereingabeeinheit 7 und die Parameteranzeigeeinheit 9 sind zusammen angeordnet, vorwiegend übereinander zwischen der Stelleingabeeinheit 5 und der Eingabeeinheit 17. Über sie kann z.B. die Geschwindigkeit einer Bewegung der Komponenten einer Spritzgießmaschine eingegeben und angezeigt werden. Die Parameteranzeigeeinheit 9 weist eine Bargraph-Anzeige 13, vorzugsweise mit einer Vielzahl von Lichtsegmenten auf, die in Fig. 2 beispielhaft eingezeichnet sind. Je nachdem wie viele Segmente der Bargraph-Anzeige 13 leuchten, kann eine höhere bzw. niedrigere Stellgeschwindigkeit der Stellfunktion symbolisiert werden. Vorzugsweise folgt die Bargraph-Anzeige 13 einem Überstreichen der Fläche 11 der Parametereingabeeinheit 7. Alternativ ist es jedoch auch denkbar, dass mittels der Bargraph-Anzeige 13 ein tatsächlich an der Maschine 3 auftretender Stellparameter zurückgemeldet wird. Vorteilhaft erfolgt die Rückmeldung der Stellparameter simultan mit dem Berühren der Fläche 11 und/oder des tatsächlich vorhandenen Stellparameters, also z.B. dem eigentlichen Stellvorgang einer Stellgeschwindigkeit als Stellparameter.

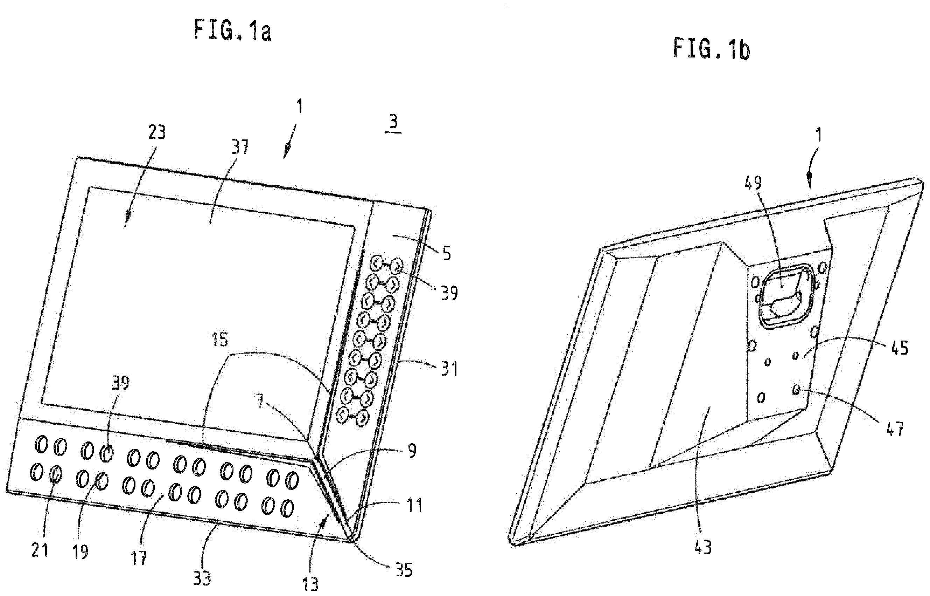

Wie in den Fig. 1a und 2 zu erkennen, ist beidseitig von der Parameteranzeigeeinheit 9, insbesondere beidseitig der Bargraph-Anzeige 13 eine Leuchtanzeige 15 angeordnet. Die Leuchtanzeige 15 erstreckt sich von dem Eck 35 ausgehend entlang der Längsausdehnung des Freiraums bzw. der darin angeordneten Parameteranzeigeeinheit 9 und spreizt sich an einem inneren Ende der Parameteranzeigeeinheit 9 y-förmig auf. Sie erstreckt sich insbesondere y-förmig parallel entlang der Eingabeeinheit 17 und der Stelleingabeeinheit 5.

Mittels der Leuchtanzeige 15 kann simultan zu dem interaktiven Steuern der Maschine 3 eine Rückmeldung eines Zustandes der Maschine 3 erfolgen. Dies kann durch ein Modulieren der Leuchtanzeige, insbesondere durch ein Ändern einer Farbe der Leuchtanzeige 15 erfolgen. Damit lässt sich ein Bediener der Mensch-Maschineschnittstelle 1 stets über den Zustand der Maschine 3, insbesondere hinsichtlich der aktuell manuell gesteuerten Stellfunktion informieren.

Die Mensch-Maschineschnittstelle 1 weist außerdem einen in den Fig. 1a und 2 sichtbaren berührungssensitiven Bildschirm 23 auf. An zwei aneinandergrenzenden Seiten des Bildschirms 23 sind benachbart zu dem Bildschirm 23 bzw. entlang der Seiten die Stelleingabeeinheit 5 und die Eingabeeinheit 17 angeordnet. Der Bildschirm 23 kann als sogenannter Touchscreen, insbesondere multitouchfähig, also mehrere Berührpunkte gleichzeitig auflösend, ausgeführt sein. Vorzugsweise erstreckt sich eine berührungssensitive Oberfläche 37 des Bildschirms 23 über die Stelleingabeeinheit 5 und die Eingabeeinheit 17. So kann z.B. die Fläche 11 zum Bedienen der Parametereingabeeinheit 7 bereitgestellt werden. Gemäß einer Alternative können die Fläche 11 jedoch auch eine separate Vorrichtung zum Erfassen von Berührungen aufweisen und die Stelleingabeeinheit 5 und/oder die Eingabeeinheit 17 herkömmliche beziehungsweise separate Tasten sein.

Sowohl die Eingabeeinheit 17 als auch die Stelleingabeeinheit 5 weisen eine Vielzahl von physikalisch fest vorgesehenen Bedienelementen 21 auf. Vorzugsweise weisen diese transparente Zylinder, vorzugsweise Glaszylinder 19 auf. Die Glaszylinder können aus einem beliebigen transparenten Werkstoff wie Glas, Acrylglas, einem anderen transparenten Kunststoff und/oder dergleichen gebildet sein. Vorzugsweise weisen die Oberfläche 37 und die Glaszylinder 19 identische Werkstoffe auf.

Die Bedienelemente 21 der Eingabeeinheit 17 weisen unterschiedliche Piktogramme 39 zum Symbolisieren einer damit auswählbaren Stellfunktion der Maschine 3 auf und sind mit diesen Funktionen vorzugsweise fest belegt. Beispielsweise handelt es sich dabei um ein Piktogramm zum Symbolisieren einer Schneckenbewegung einer Plastifiziereinheit der Maschine 3. Ein Drücken bzw. Betätigen des entsprechenden Bedienelementes 21 führt dazu, dass zwei nebeneinander angeordnete Bedienelemente 21 der Stelleingabeeinheit 5 für die entsprechende Stellfunktion, also ein Verstellen der Schnecke freigeschaltet werden. Über wenigstens eine auf dem Bildschirm 23 darstellbare Auswahleingabeeinheit 42 - im Ausführungsbeispiel ist nur ein Symbol dafür dargestellt, es können aber auch mehrere sein - können bestimmte Stelleingaben bzw. Bedienelemente 21 der Stelleingabeeinheit 5 für die weitere Bedienung ausgewählt werden.

Bei einer bevorzugten Alternative erscheint auf dem berührungssensitiven Bildschirm neben den Bedienelementen 21 der Stelleingabeeinheit 5 ein Symbol 41 wie z.B. ein zweigeteiltes Symbol, das eine funktionelle Belegung der Bedienelemente 21 verdeutlicht, also beispielsweise Richtungen der Schneckenbewegung. Die Beschreibung der Schneckenbewegung ist beispielhaft und kann für sämtliche mögliche Stellfunktionen der Maschine 3, im Ausführungsbeispiel eine Spritzgießmaschine, analog angewendet werden.

Es ist ersichtlich, dass die Eingabeeinheit 17 und/oder auch die Auswahleingabeeinheit 42 deutlich mehr Bedienelemente 21 aufweist, als mittels der Stelleingabeeinheit 5 Stellfunktionen gleichzeitig manuell gesteuert werden können. Um dennoch alle Stellfunktionen ansteuern zu können, werden die Bedienelemente 21 der Stelleingabeeinheit 5 wie vorab beschrieben dynamisch belegt, also gegebenenfalls mit einem der Symbole 41 gekennzeichnet oder nach erneuter Betätigung und/oder nach Zeitablauf und/oder gemäß einer anderen Bedingung für eine Belegung mit einer weiteren Stellfunktion wieder freigegeben.

Zum Steuern einer Stellfunktion der Maschine 3 erfolgt also zunächst eine Auswahleingabe 29 an einem der Bedienelemente 21 der Auswahleingabeeinheit 42. Ebenso kann aber auch eine Eingabe über eines der fest mit einer Funktion belegten Bedienelemente 21 der Eingabeeinheit 17 erfolgen. In Reaktion darauf werden zwei Bedienelemente 21 der Stelleingabeeinheit 5 freigeschaltet, also dynamisch belegt und mit dem Symbol 41 für die ausgewählte Stellfunktion auf dem berührungssensitiven Bildschirm 23 gekennzeichnet. Nachdem die Auswahl der Stellfunktion erfolgt ist, kann diese durch eine Stelleingabe 25 an den zwei Bedienelementen 21 der Stelleingabeeinheit 5 manuell gesteuert werden, insbesondere bidirektional, wie vorzugsweise durch Pfeilsymbole auf den Bedienelementen 21 symbolisiert.

Während der Bedienung der Stelleingabeeinheit 5 kann simultan durch ein Überstreichen der Fläche 11 an der Parametereingabeeinheit 7 z.B. die Stellgeschwindigkeit der entsprechend ausgewählten Stellfunktion, also beispielsweise der Schneckenbewegung, gestellt werden. Die Beschreibung der Geschwindigkeit der Schneckenbewegung als Parameter ist beispielhaft und kann für sämtliche mögliche Stellfunktionen von Parametern an der Maschine 3 analog angewendet werden. Außerdem erfolgt ebenfalls simultan die Anzeige der so eingegebenen bzw. ausgewählten Stellgeschwindigkeit mittels der Parameteranzeigeeinheit 9. Das Eingeben der Stellgeschwindigkeit erfolgt mittels einer Parametereingabe 27, insbesondere einem bidirektionalen Überstreichen der Fläche 11. Die Eingaben 25 bis 29 sind in Fig. 2 mittels Pfeilen symbolisiert.

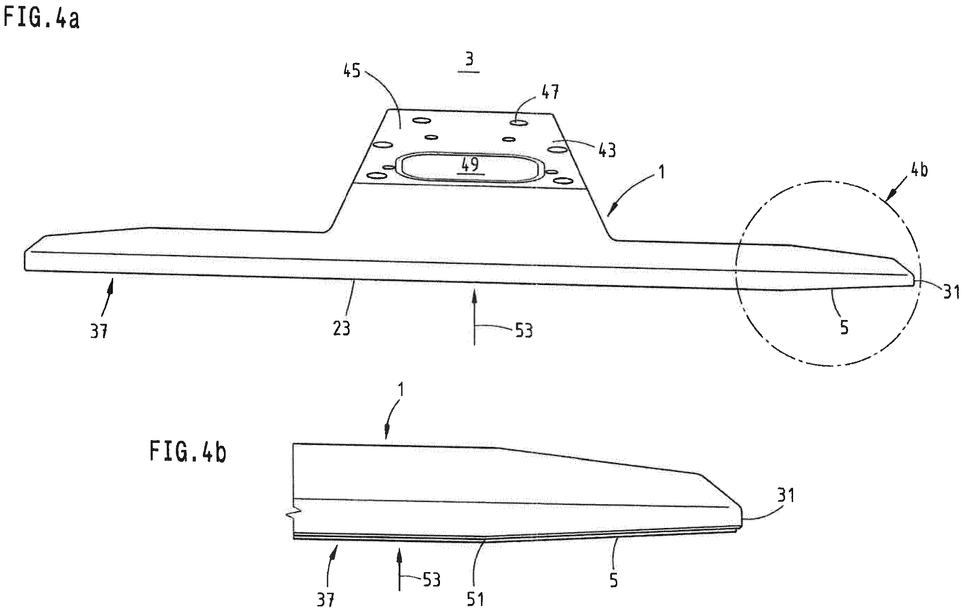

Wie in den Fig. 1b, 3 und 4a zu erkennen, weist die Mensch-Maschineschnittstelle 1 eine Befestigungskonsole 43 auf. Die Befestigungskonsole 43 weist eine in einem spitzen Winkel zu der Oberfläche 37 des Bildschirms 23 angeordnete Befestigungsfläche 45 auf. Dadurch ist es möglich, die Mensch-Maschineschnittstelle 1 an einer vertikalen Wandung der Maschine 3 oder auf einem Ständer an der Maschine so anzubringen, dass der Bildschirm 23 relativ zur Vertikalen geneigt ist. Dadurch kann die Ergonomie, insbesondere ein Ablesen und/oder Eingeben an der Mensch-Maschineschnittstelle 1 verbessert werden. Insbesondere kann ein Betrachten und Ablesen der Mensch-Maschineschnittstelle 1 von schräg oben erleichtert werden. Wie in den Fig. 1b und 4a zu erkennen, weist die Befestigungsfläche 45 Bohrungen 47 für eine Anbringung und einen Durchbruch 49 für eine Kontaktierung mit der Maschine 3 auf.

Außerdem sind zum Verbessern der Ergonomie Stelleingabeeinheit 5 und/oder Eingabeeinheit 17 zumindest geringfügig gegen die Oberfläche 37 des Bildschirms 23 geneigt, was besonders gut dem Detail der Fig. 4b zu entnehmen ist. Oberfläche 37 und die Eingabeeinheiten 17 und/oder 5 sind in einem stumpfen Winkel 51 zueinander angeordnet. In einer Betrachtungsrichtung 53 gesehen, die in Fig. 4a und 4b mittels eines Pfeiles symbolisiert ist, sind die Eingabeeinheiten 5 und/oder 17 von dem Bediener der Mensch-Maschineschnittstelle 1 weg geneigt. In Bezug zu einem Bediener sind Stelleingabeeinheit 5 und/oder Eingabeeinheit 17 von diesem weg geneigt, insbesondere mit einem stumpfen Winkel z.B. zwischen 180 und 150 Grad, vorzugsweise um 179 bis 175 Grad. Durch diese Neigung wird einerseits eine angenehme Handhaltung beim Bedienen der seitlich angeordneten Eingabeeinheiten ermöglicht. Außerdem können dadurch möglicherweise erfolgende Fehlbedienungen beim Nutzen des berührungssensitiven Bildschirms, beispielsweise durch einen Arm des Bedieners vermieden werden, da dieser von dem Arm des Bedieners weg geneigt ist und deshalb von diesem nicht versehentlich berührt wird.

Im Folgenden wird mit Bezug auf Fig. 2 ein Verfahren zum interaktiven Steuern der Maschine 3 mittels der Mensch-Maschineschnittstelle 1 näher erläutert:
Durch die Mensch-Maschineschnittstelle 1 werden die Stelleingabeeinheit 5, die Parametereingabeeinheit 7 und die Parameteranzeigeeinheit 9 bereitgestellt. Es erfolgt ein Erfassen der manuellen Stelleingabe 25 zum manuellen Steuern der Stellfunktion der Maschine 3. Simultan wird die Parametereingabe 27 erfasst, wobei ebenfalls simultan mittels der Parameteranzeigeeinheit 9 der Stellparameter wie eine Stellgeschwindigkeit optisch wahrnehmbar dem Bediener der Mensch-Maschineschnittstelle 1 zurückgemeldet wird. Vorzugsweise erfolgt zuvor ein Erfassen der manuellen Auswahleingabe 29 zum Auswählen der Stellfunktion an der bereitgestellten Auswahleingabeeinheit 42. In Reaktion bzw. in Abhängigkeit der Auswahleingabe 29 wird die Stelleingabeeinheit 5 freigeschaltet. Erst dann kann das Erfassen der manuellen Stelleingabe 25 erfolgen. Gemäß einer bevorzugten Alternative ist es denkbar, die Auswahleingabe 29 ebenfalls rück zu melden bzw. zu quittieren. Dies ist insbesondere durch ein Hinterleuchten des entsprechenden Bedienelementes 21 mit unterschiedlichen Helligkeiten denkbar. Z.B. kann das Bedienelement 21 der Eingabeeinheit 17 nach erfolgter Bedienung oder die Auswahleingabeeinheit 42 mit einer maximalen Helligkeit hinterleuchtet werden. Auswählbare Bedienelemente 21 bzw. damit steuerbare Stellfunktionen können mit einer mittleren Helligkeit hinterleuchtet werden. Nicht auswählbare, also an der Maschine 3 aktuell nicht zur Verfügung stehende Stellfunktionen können nicht oder nur mit einer schwächeren Hinterleuchtung z.B. an der Eingabeeinheit 17 hinterleuchtet werden.

Gemäß einer weiteren Alternative erfolgt ein Rückmelden des Freischaltens und/oder der ausgewählten Stellfunktion auch an der Stelleingabeeinheit 5. Dies erfolgt gegebenenfalls ebenfalls mittels eines Hinterleuchtens, insbesondere eines Anhebens einer Helligkeit der entsprechenden Bedienelemente 21 und/oder mittels des auf dem Bildschirm 23 dargestellten Symbols 41. Mittels des Symbols 41 kann die ausgewählte Stellfunktion visualisiert werden. Dementsprechend kann ein Erfassen der manuellen Stelleingabe mittels der entsprechenden Bedienelemente 21 der Stelleingabeeinheit 5 erfolgen. Die Bedienelemente 21 der Stelleingabeeinheit 5 werden also dynamisch belegt in Abhängigkeit der Auswahleingabe 29 an der Stelleingabeeinheit 5.

Die Leuchtanzeige 15 und/oder die Parameteranzeigeeinheit 9 haben eine in Richtung des Ecks 35 spitz zulaufende Y-Form, wodurch eine intuitive Bedienung bzw. Einstellung der Stellparameter unterstützt bzw. möglich wird. Die Parametereingabeeinheit 7 bildet einen Schieberegler zum Einstellen von Parametern wie Druck, Temperatur, Zeitpunkte wie z.B. Umschaltzeitpunkte zwischen Einspritzen und Nachdruckphase, Zeitpunkte für den Betrieb des Auswerfers, Teilzykluszeiten z.B. beim Mehrkomponentenspritzen, Wegangaben für die Formschließeinheit, Formhöhe, Dosier- und Einspritzmenge, Volumenstrom, Menge an zumischbaren Komponenten und vieles mehr nach, insbesondere zum Einstellen und/oder Reduzieren von Achsgeschwindigkeiten der Stellfunktion bzw. der Maschine 3. Vorteilhaft kann ein einzustellender Parameterwert nahezu stufenlos bzw. in vielen einzelnen Schritten durch ein einfaches Schieben bzw. Gleiten eines Fingers über die vorzugsweise als Glasfläche ausgeführte Fläche 11 erfolgen. Insbesondere wird der aktuell eingestellte Parameterwert, also z.B. die aktuell eingestellte Stellgeschwindigkeit über die Bargraph-Anzeige 13, die insbesondere eine Vielzahl von einzelnen LEDs aufweist, visualisiert, insbesondere in einer markanten Pfeilform, um ein intuitives Erfassen des Stellparameters zu unterstützen. Durch ein Modulieren der Leuchtanzeige 15 und/oder der Bargraph-Anzeige 13 kann stets der aktuelle Zustand der Maschine 3, insbesondere durch entsprechende Farben, dargestellt werden.

Die Bedienelemente 21 sind vorteilhaft taktil auffindbar ausgeführt, insbesondere mittels Glaszylinder 19. Beispielsweise kann dadurch die Stellfunktion Auswerfer vor und Auswerfer zurück, sobald nach einer entsprechenden Auswahleingabe 29 freigeschaltet, realisiert werden. Der entsprechende Auslöser bzw. Taster ist der Glaszylinder 19, der vorzugsweise dicht und bündig in eine Scheibe der Mensch-Maschineschnittstelle 1 eingebracht ist, wobei bei einer Betätigung sowohl ein Tastenhub als auch eine Kraftwegekennlinie einer typischen Taste bzw. eines Tasters nachbildbar sind. Durch den bündigen dichten Einbau und die Materialwahl Glas des Tastenzylinders, also des Glaszylinders 19 ist ein einfaches Reinigen der Stelleingabeeinheit 5, der Eingabeeinheit 17 und/oder der gesamten Mensch-Maschineschnittstelle 1 möglich. Die Bedienelemente 21, insbesondere deren Glaszylinder 19, beinhalten vorzugsweise eines der Piktogramme 39 und werden vorzugsweise in mehreren Helligkeitsstufen hinterleuchtet, z.B. zum Symbolisieren eines Auswahlzustandes und/oder einer Freigabe zur Bedienung. Insbesondere können für eine Benutzerführung bedienbare Bedienelemente 21 beleuchtet werden, wobei aktuell nicht bedienbare abgedunkelt werden.

Die z.B. als Tastaturleiste ausgeführte Eingabeeinheit 17 weist vorzugsweise alle wesentlichen Funktionen für eine Bedienung einer Spritzgießmaschine und auch eine dementsprechende Vielzahl an Piktogrammen 39 auf, die ortsfest an der Mensch-Maschineschnittstelle 1, also jederzeit bestmöglich wiederfindbar, angeordnet sind. Bedienelemente 21 bzw. Tasten mit einer Schaltfunktion, wie Antriebe ein/aus, können ihren Betätigungszustand symbolisieren, insbesondere durch ein Hinterleuchten mit unterschiedlichen Helligkeitsstufen.

Die Stelleingabeeinheit 5, die vorzugsweise ebenfalls als Tastaturleiste ausgeführt ist, weist frei belegbare Bedienelemente 21 bzw. Tasten auf. Die Bedienelemente 21 weisen insbesondere Pfeilsymbole auf, die eine Richtung der damit manuell steuerbaren Stellparameter symbolisieren können. Zusätzlich können auf dem Bildschirm 23 die Symbole 41 zum Anzeigen der jeweiligen Funktion der in aus Richtung der Fig. 2 gesehen rechts daneben angeordneten Bedienelemente 21 dargestellt werden. Der berührungssensitive Bildschirm 23 ist insbesondere als hochauflösender Multitouchbildschirm ausgeführt. Bedarfsweise ist das jeweilige Symbol 41 zweigeteilt, um zusätzlich die Richtungen der Stellfunktion zu symbolisieren.

Besonders bevorzugt sind Stelleingabeeinheit 5 und/oder Eingabeeinheit 17 mittels einer in den Figuren nicht näher dargestellten Echtzeitschnittstelle direkt mit einer Maschinensteuerung der Maschine 3 verbunden. Dadurch sind diese unabhängig von einer Rechen- bzw. Datenverarbeitungsvorrichtung der Mensch-Maschineschnittstelle 1. Die Stelleingabeeinheit und/oder Eingabeeinheit wirkt damit nicht auf den HMI PC, sondern wird über eine taktsynchrone, serielle Schnittstelle direkt auf die Maschinensteuerung zur Wirkung verbunden. Dadurch ist ein unmittelbares Feedback zwischen Soll- und Istwert über die Parameteranzeigeeinheit 9 und eine Parametrierung in Echtzeit möglich.

Wie in Fig. 3 erkennbar, kann die komplette Mensch-Maschineschnittstelle 1 bzw. die Oberfläche 37 des Bildschirm 23 geneigt an der Maschine 3 oder auf einem zeichnerisch nicht dargestellten Ständer angebracht werden, insbesondere in einem Winkel zwischen 10 und 20 Grad, insbesondere 15 Grad zur Vertikalen. Dadurch kann die Ergonomie für Bildschirmarbeitsplätze optimiert werden. Ferner kann die Mensch-Maschineschnittstelle 1 über eine Höhenverstellung an unterschiedlich große Bediener anpassbar sein. Außerdem sind, wie in Fig. 4b ersichtlich die Stelleingabeeinheit 5 und/oder die Eingabeeinheit 17 leicht nach hinten geneigt und erleichtern zusammen mit der gegenläufigen Neigung eines Gehäuses der Mensch-Maschineschnittstelle 1, die Bedienung der einzelnen Bedienelemente 21 bzw. Tasten und der Fläche 11 der Parametereingabeeinheit 7.

Im konkreten bevorzugten Ausführungsbeispiel kann durch das Betätigen eines fest belegten Bedienelements 21 im Eingabefeld 17, z.B. die Taste "Schnecke vor", direkt eine Fahrfunktion einer Achse ausgeführt werden. Einige dieser Tasten sind dabei Direktfahrtasten, d.h. bei Ihrer Betätigung erfolgt eine unmittelbare (manuelle betätigte) Bewegung. Im Automatikzyklus ist das Betätigen dieser Taste jedoch gesperrt, da eine Betätigung nicht plausibel ist, was durch eine fehlende Hinterleuchtung visualisiert wird. Im Handbetrieb sind die Bedienelemente 21 freigeschaltet, hinterleuchtet und werden bei Betätigung noch heller hinterleuchtet. Das Eingabefeld 17 enthält fest belegt die wesentlichen Tasten der Spritzgießmaschine, sodass eine Bedienung ohne Bildschirmnavigation möglich ist.

### Bezugszeichenliste

- 1: Mensch-Maschineschnittstelle
- 3: Maschine
- 5: Stelleingabeeinheit
- 7: Parametereingabeeinheit
- 9: Parameteranzeigeeinheit
- 11: Fläche
- 13: Bargraph-Anzeige
- 15: Leuchtanzeige
- 17: Eingabeeinheit
- 19: Glaszylinder
- 21: Bedienelement
- 23: Bildschirm
- 25: Stelleingabe
- 27: Parametereingabe
- 29: Auswahleingabe
- 31: rechter Rand
- 33: unterer Rand
- 35: Eck
- 37: Oberfläche
- 39: Piktogramme
- 41: Symbol
- 42: Auswahleingabeeinheit
- 43: Befestigungskonsole
- 45: Befestigungsfläche
- 47: Bohrung
- 49: Durchbruch
- 51: Winkel
- 53: Betrachtungsrichtung

## Patentansprüche

1. Mensch-Maschineschnittstelle (1) zur simultanen und interaktiven Steuerung einer Stellfunktion einer Maschine (3), umfassend:
- einen berührungssensitiven Bildschirm (23),
- eine vom berührungssensitiven Bildschirm (23) unabhängig bedienbare Stelleingabeeinheit (5), die dazu eingerichtet ist, in Abhängigkeit einer Stelleingabe (25) eine Stellfunktion der Maschine (3) manuell zu steuern, und
- eine von der Stelleingabeeinheit (5) als auch vom berührungssensitiven Bildschirm (23) unabhängig bedienbare Parametereingabeeinheit (7),
- wobei Stelleingabeeinheit (5) und Parametereingabeeinheit (7) mittels einer Echtzeitschnittstelle mit einer Maschinensteuerung der Maschine verbunden sind, wobei die unabhängig bedienbare Parametereingabeeinheit (7) dazu eingerichtet ist, in Abhängigkeit einer Parametereingabe (27) simultan einen von der Stellfunktion funktional abhängigen Stellparameter der Stellfunktion manuell zu steuern, und wobei die Mensch-Maschineschnittstelle (1) eine mit der Parametereingabeeinheit (7) zusammen angeordneten Parameteranzeigeeinheit (9) umfasst, die dazu eingerichtet ist, einen Sollwert oder einen tatsächlich an der Maschine (3) auftretenden Istwert des manuell gesteuerten Stellparameters rückzumelden, wobei die Parameteranzeigeeinheit (9) eine entlang einer länglichen berührungssensitiven Fläche (11) der Parametereingabeeinheit (7) ausgerichtete Bargraph-Anzeige (13) aufweist, **dadurch gekennzeichnet dass** zumindest seitlich oder beidseitig der Bargraph-Anzeige (13) eine modulierbare Leuchtanzeige (15) vorgesehen ist, mittels der ein Zustand der Maschine (3) anzeigbar ist.

2. Mensch-Maschineschnittstelle nach Anspruch 1, **dadurch gekennzeichnet, dass** die Bargraph-Anzeige (13) und/oder die Leuchtanzeige (15) konisch sind und/oder zumindest die Leuchtanzeige (15) sich y-förmig über die Mensch-Maschineschnittstelle (1) erstreckt.

3. Mensch-Maschineschnittstelle nach Anspruch 2, **gekennzeichnet durch** eine unabhängig bedienbare Auswahleingabeeinheit (42), mittels der die Stellfunktion auswählbar ist.

4. Mensch-Maschineschnittstelle nach einem der vorhergehenden Ansprüche, **dadurch gekennzeichnet, dass** eine Eingabeeinheit (17) mit vorzugsweise fest belegten Tasten vorgesehen ist und dass die Parameteranzeigeeinheit (9) und/oder die Parametereingabeeinheit (7) zwischen der Eingabeeinheit (17) und der Stelleingabeeinheit (5) angeordnet sind.

5. Mensch-Maschineschnittstelle nach Anspruch 4 **dadurch gekennzeichnet, dass** die Eingabeeinheit (17) und/oder Stelleingabeeinheit (5) flächenbündig eingelassene Glaszylinder (19) als haptisch wahrnehmbare Bedienelemente (21) aufweisen.

6. Mensch-Maschineschnittstelle nach einer Ansprüche 4 oder 5, wobei die Eingabeeinheit (17) mittels der Echtzeitschnittstelle mit der Maschinensteuerung der Maschine (3) verbunden ist.

7. Verfahren zur interaktiven Steuerung eines Stellparameters einer Maschine (3) mittels einer Mensch-Maschineschnittstelle (1), mit:
- Bereitstellen eines berührungssensitiven Bildschirms (23),
- Bereitstellen einer vom berührungssensitiven Bildschirm (23) unabhängig bedienbaren Stelleingabeeinheit (5) der Mensch-Maschineschnittstelle (1),
- Erfassen einer manuellen Stelleingabe (25) mittels der bereitgestellten Stelleingabeeinheit (5) zum manuellen Steuern einer Stellfunktion der Maschine (3),
- Bereitstellen einer vom berührungssensitiven Bildschirm (23) unabhängig bedienbaren Parametereingabeeinheit (7) der Mensch-Maschineschnittstelle (1),
- simultanes Erfassen einer manuellen Parametereingabe (27) mittels der bereitgestellten Parametereingabeeinheit (7) zum manuellen Steuern eines von der Stellfunktion funktional abhängigen Parameters der Stellfunktion,
- Bereitstellen einer Parameteranzeigeeinheit (9) der Mensch-Maschineschnittstelle (1),
- Verbinden der Stelleingabeeinheit (5) und der Parametereingabeeinheit (7) mittels einer Echtzeitschnittstelle mit einer Maschinensteuerung der Maschine (3),
- simultanes Rückmelden des Stellparameters der Stellfunktion mittels der bereitgestellten Parameteranzeigeeinheit (9),
- simultanes Steuern der Stellfunktion und des Stellparameters und dabei Rückmelden eines Sollwerts oder eines tatsächlich an der Maschine (3) auftretenden Istwerts des Stellparameters der Stellfunktion mittels einer entlang einer länglichen berührungssensitiven Fläche (11) der bereitgestellten Parameteranzeigeeinheit (9) ausgerichteten Bargraph-Anzeige (13), **dadurch gekennzeichnet dass** zumindest seitlich oder beidseitig der Bargraph-Anzeige (13) eine Leuchtanzeige (15) modulierbar ist, mittels der ein Zustand der Maschine (3) anzeigbar ist.

8. Verfahren nach Anspruch 7, **gekennzeichnet durch**:
Verbinden einer Eingabeeinheit (17) mittels der Echtzeitschnittstelle mit der Maschinensteuerung der Maschine (3).

9. Verfahren nach Anspruch 7 oder 8, **gekennzeichnet durch**:
- Bereitstellen einer Auswahleingabeeinheit (42) der Mensch-Maschineschnittstelle (1),
- Erfassen einer manuellen Auswahleingabe (29) mittels der Auswahleingabeeinheit (42) zum Auswählen der Stellfunktion,
- Freischalten der Stelleingabeeinheit (5) zum Erfassen der manuellen Stelleingabe (25) in Abhängigkeit der erfassten Auswahleingabe (29).

10. Verfahren nach den Ansprüchen 8 und 9, **gekennzeichnet durch**:
- Rückmelden und/oder Symbolisieren des Freischaltens und/oder der ausgewählten Stellfunktion an der Eingabeeinheit (17) und/oder der Stelleingabeeinheit (5).

11. Verfahren nach Anspruch 9 oder 10, **gekennzeichnet durch**:
- dynamisches Belegen eines physikalischen Bedienelementes (21) der Stelleingabeeinheit (5) in Abhängigkeit der manuellen Auswahleingabe (29),
- Erfassen der manuellen Stelleingabe (25) mittels des physikalischen Bedienelementes (21) der Stelleingabeeinheit (5).

12. Verfahren nach Anspruch 11, **gekennzeichnet durch**:
- Symbolisieren der ausgewählten Stellfunktion auf, an oder neben dem dynamisch belegten Bedienelement (21) der Stelleingabeeinheit (5).

13. Spritzgießmaschine mit einer Mensch-Maschineschnittstelle (1) nach einem der Ansprüche 1 bis 6 und/oder ausgelegt, eingerichtet, konstruiert und/oder programmiert zum Durchführen eines Verfahrens nach einem der Ansprüche 7 bis 12.

## Claims

1. Human-machine interface (1) for the simultaneous and interactive control of a regulating function of a machine (3), comprising:
- a touch-sensitive screen (23)
- a regulating input unit (5), which is operable independently of the touch-sensitive screen (23) and configured to manually control a regulating function of the machine (3) in dependence on a regulating input (25), and
- a parameter input unit (7) that is operable independently of the regulating input unit (5) and of the touch-sensitive screen (23),
- wherein regulating input unit (5) and parameter input unit (7) are connected to a machine control of the machine by means of a real-time interface,
- wherein the parameter input unit (7), which can be operated independently, is configured to simultaneously manually control, as a function of a parameter input (27), an regulating parameter of the regulating function which is functionally dependent on the regulating function, and
- wherein the human-machine interface (1) comprises a parameter display unit (9) that is arranged together with the parameter input unit (7) and configured to feed back a nominal value or a current value, actually occurring in the machine (3), of the manually controlled regulating parameter, wherein the parameter display unit (9) comprises a bar graph indicator (13) that is oriented along a longitudinal touch-sensitive surface (11) of the parameter input unit (7),
**characterized in that** at least laterally or on both sides of the bar graph indicator (13) a modulable illuminated readout (15) is provided by means of which a state of the machine (3) is displayable.

2. A human-machine interface according to Claim 1, **characterized in that** the bar graph indicator (13) and/or the illuminated readout (15) are conical and/or at least the illuminated readout (15) extends in the shape of a Y over the human-machine interface (1).

3. A human-machine interface according to Claim 2, **characterized by** an independently operable selection input unit (42) by means of which the regulating function is selectable.

4. A human-machine interface according to any of the preceding Claims, **characterized in that** an input unit (17) preferably having permanently assigned keys is provided and **in that** the parameter display unit (9) and/or the parameter input unit (7) are arranged between the input unit (17) and the regulating input unit (5).

5. A human-machine interface according to Claim 4, **characterized in that** the input unit (17) and/or the regulating input unit (5) comprise glass cylinders (19) that are let into and are flush with the surface and serve as haptically perceptible operating elements (21).

6. A human-machine interface according to any of the Claims 4 or 5, wherein the input unit (17) is connected to the machine control of the machine (3) by means of the real time interface.

7. Method of interactively controlling a regulating parameter of a machine (3) by means of a human-machine interface (1), comprising:
- providing a touch-sensitive screen (23),
- providing a regulating input unit (5) of the human-machine interface (1) which is operable independently from the touch-sensitive screen (23),
- detecting a manual regulating input (25) by means of the provided regulating input unit (5) for manually controlling a regulating function of the machine (3),
- providing a parameter input unit (7) of the human-machine interface (1), which parameter input unit (7) can be operated independently of the touch-sensitive screen (23),
- simultaneously detecting a manual parameter input (27) by means of the provided parameter input unit (7) for manually controlling a parameter of the regulating function which parameter is functionally dependent of the regulating function,
- providing a parameter display unit (9) of the human-machine interface (1),
- connecting the regulating input unit (5) and the parameter input unit (7) by means of a real-time interface to a machine control of the machine (3),
- simultaneously feeding back the regulating parameter of the regulating function by means of the provided parameter display unit (9),
- simultaneously controlling the regulating function and the regulating parameter and thereby feeding back a nominal value or a current value, that is actually occurring in the machine (3), of the regulating parameter of the regulating function by means of a bar graph indicator (13) oriented along a longitudinal touch-sensitive surface (11) of the provided parameter display unit (9),
**characterized in that** an illuminated readout (15) is modulable at least laterally or on both sides of the bar graph display (13), by means of which a state of the machine (3) is displayable.

8. A method according to Claim 7, **characterized by**:
connecting an input unit (17) to a machine control of the machine (3) by means of a real time interface.

9. A method according to Claim 7 or 8, **characterized by**:
- providing a selection input unit (42) of the human-machine interface (1),
- detecting a manual selection input (29) by means of the selection input unit (42) for selecting the regulating function,
- enabling the regulating input unit (5) for detecting the manual regulating input (25) in dependence on the detected selection input (29).

10. A method according to Claim 8 and 9, **characterized by**:
- feeding back and/or symbolizing the enabling process and/or the selected regulating function at the input unit (17) and/or the regulating input unit (5).

11. A method according to Claim 9 or 10, **characterized by**:
- dynamically assigning a physical operating element (21) of the regulating input unit (5) in dependence on the manual selection input (29),
- detecting the manual regulating input (25) by means of the physical operating element (21) of the regulating input unit (5).

12. A method according to Claim 11, **characterized by**:
- symbolizing the selected regulating function on or beside the dynamically assigned operating element (21) of the regulating input unit (5).

13. injection moulding machine comprising a human-machine interface (1) according to any of the Claims 1 to 6 and/or configured, equipped, constructed and/or programmed to carry out a method in accordance with any of the Claims 7 to 12.

## Revendications

1. Interface homme-machine (1) pour la commande simultanée et interactive d'une fonction de réglage d'une machine (3), comprenant :
- un écran tactile (23) ;
- une unité de saisie de réglage (5) actionnable indépendamment de l'écran tactile (23) et qui est conçue pour commander manuellement une fonction de réglage de la machine (3) en fonction de la saisie de réglage (25), et
- une unité de saisie de paramètre (7) actionnable indépendamment tant de l'unité de saisie de réglage (5) que de l'écran tactile (23),
- l'unité de saisie de réglage (5) et l'unité de saisie de paramètres (7) étant reliées au moyen d'une interface en temps réel à une commande machine de la machine,
- l'unité de saisie de paramètre (7) actionnable indépendamment étant conçue pour commander manuellement, en fonction d'une saisie de paramètres (7), simultanément un paramètre de réglage de la fonction de réglage dépendant fonctionnellement de la fonction de réglage, et
- l'interface homme-machine (1) comprenant une unité d'affichage de paramètre (9) disposée avec l'unité de saisie de paramètre (7) et qui est conçue pour communiquer en retour une valeur de consigne ou une valeur réelle du paramètre de réglage commandé manuellement existant réellement au niveau de la machine (3), l'unité d'affichage de paramètre (9) présentant un affichage à graphique à barres (13) placé le long d'une surface tactile allongée (11) de l'unité de saisie de paramètre (7),
**caractérisée en ce qu'**il est prévu latéralement ou des deux côtés de l'affichage à graphique à barres (13) un indicateur lumineux modulable (15) au moyen duquel un état de la machine (3) peut être indiqué.

2. Interface homme-machine selon la revendication 1, **caractérisé en ce que** l'affichage à graphique à barres (13) et/ou l'indicateur lumineux (15) est/sont conique(s) et/ou au moins l'indicateur lumineux (15) s'étend en forme de « y » au-dessus de l'interface homme-machine (1).

3. Interface homme-machine selon la revendication 2, **caractérisée par** une unité de saisie de choix (42) actionnable indépendamment, au moyen de laquelle la fonction de réglage peut être choisie.

4. Interface homme-machine selon l'une des revendications précédentes, **caractérisée en ce qu'**une unité de saisie (17) ayant de préférence des touches physiques est prévue et **en ce que** l'unité d'affichage de paramètre (9) et/ou l'unité de saisie de paramètre (7) est/sont disposée(s) entre l'unité de saisie (17) et l'unité de saisie de réglage (5).

5. Interface homme-machine selon la revendication 4, **caractérisée en ce que** l'unité de saisie (17) et/ou l'unité de saisie de réglage (5) présente(nt) des cylindres en verre (19) encastrés et affleurants en tant qu'éléments d'actionnement (21) sensibles au toucher.

6. Interface homme-machine selon l'une des revendications 4 et 5, dans laquelle l'unité de saisie (17) est reliée au moyen de l'interface en temps réel à la commande machine de la machine (3).

7. Procédé de commande interactive d'un paramètre de réglage d'une machine (3) au moyen d'une interface homme-machine (1), comportant :
- la mise à disposition d'un écran tactile (23),
- la mise à disposition d'une unité de saisie de réglage (5) de l'interface homme-machine (1) actionnable indépendamment de l'écran tactile (23),
- la réalisation d'une saisie de réglage (25) manuelle au moyen de l'unité de saisie de réglage mise à disposition (5) en vue d'une commande manuelle d'une fonction de réglage de la machine (3),
- la mise à disposition d'une unité de saisie de paramètre (7) de l'interface homme-machine (1) actionnable indépendamment de l'écran tactile (23),
- la réalisation simultanée d'une saisie de paramètre manuelle (27) au moyen de l'unité de saisie de paramètre (7) mise à disposition, en vue d'une commande manuelle d'un paramètre de la fonction de réglage dépendant fonctionnellement de la fonction de réglage,
- la mise à disposition d'une unité d'affichage de paramètre (9) de l'interface homme-machine (1),
- la liaison de l'unité de saisie de réglage (5) et de l'unité de saisie de paramètre (7) au moyen d'une interface en temps réel avec une commande machine de la machine (3),
- la communication en retour simultanée du paramètre de réglage de la fonction de réglage au moyen de l'unité d'affichage de paramètre (9) mise à disposition,
- la commande simultanée de la fonction de réglage et du paramètre de réglage et ainsi la communication en retour d'une valeur de consigne ou d'une valeur réelle existant réellement au niveau de la machine (3) du paramètre de réglage de la fonction de réglage au moyen d'un affichage à graphiques à barres (13) placé le long d'une surface tactile allongée (11) de l'unité d'affichage de paramètre (9) mise à disposition,
**caractérisé en ce qu'**un indicateur lumineux est modulable au moins latéralement des deux côtés de l'affichage à graphique à barres (13), au moyen duquel un état de la machine (3) peut être indiqué.

8. Procédé selon la revendication 7, **caractérisé par** :
la liaison d'une unité de saisie (17) au moyen de l'interface en temps réel avec la commande machine de la machine (3).

9. Procédé selon la revendication 7 ou 8, **caractérisé par** :
- la mise à disposition d'une unité de saisie de choix (42) de l'interface homme-machine (1),
- la réalisation d'une saisie de choix manuelle (29) au moyen de l'unité de saisie de choix (42) pour le choix de la fonction de réglage,
- la mise hors tension de l'unité de saisie de réglage (5) pour la réalisation de la saisie de réglage manuelle (25) en fonction de la saisie de choix (29) réalisée.

10. Procédé selon les revendications 8 et 9, **caractérisé par** :
- la communication en retour et/ou la symbolisation de la mise hors tension et/ou de la fonction de réglage choisie au niveau de l'unité de saisie (17) et/ou de l'unité de saisie de réglage (5).

11. Procédé selon la revendication 9 ou 10, **caractérisé par** :
- l'affichage dynamique d'un élément d'actionnement physique (21) de l'unité de saisie de réglage (5) en fonction de la saisie choix manuelle (29),
- la réalisation de la saisie de réglage manuelle (25) au moyen de l'élément d'actionnement physique (21) de l'unité de saisie de réglage (5).

12. Procédé selon la revendication 11, **caractérisé par** :
- la symbolisation de la fonction de réglage choisie sur, au niveau de ou à côté de l'élément d'actionnement affiché (21) de l'unité de saisie de réglage (5).

13. Machine de moulage par injection comportant une interface homme-machine (1) selon l'une des revendications 1 à 6 et/ou présentée, conçue, construite et/ou programmée pour la mise en oeuvre d'un procédé selon l'une des revendications 7 à 12.
